# EUROPEAN PATENT APPLICATION

(11) **EP 1 744 044 A1**
(43) Date of publication of application: **17.01.2007**
(21) Application number: 05747263.1
(22) Date of filing: 05.05.2005
(51) Int. Cl.: F02D 41/14, F02M 43/00, G05B 13/02

(54) **IMPROVEMENTS TO MEANS FOR TRANSFORMING A DIESEL ENGINE INTO A LIQUEFIED NATURAL GAS ENGINE**

(30) Priority: 07.05.2004 ES 200401095; 20.01.2005 ES 200500105
(71) Applicant: ROS ROCA INDOX EQUIPOS E INGENIERIA, S.L., 25300 Tarrega (ES)
(72) Inventor: ALVAREZ FLOREZ, J. A, Uni. Poltécnica de Catalunya, E-08028 Barcelona (ES); CALLEJON AGRAMUNT,I., Uni. Poltécnica de Catalunya, E-08028 Barcelona (ES); MORENO EGUILAZ, M., Uni. Poltécnica de Catalunya, E-08028 Barcelona (ES); LALIENA JALLE,P,Ros Roca Indox Equipos e Ing., E-25300 Tarrega (ES); ROCA ENRICH, R., Ros Roca Indox Equipos S.L., E-25300 Tarrega (ES); ARTICAS GOMEZ, T., Ros Roca Indox Equipos e Ing., E-25300 Tarrega (ES)
(74) Representative: Pastells Teixido, Manuel
(86) International application number: PCT/ES2005/000241
(87) International publication number: WO 2005/108762

(57) **Abstract**

The invention relates to improvements to means for transforming a diesel engine into a liquefied natural gas engine. The improvements are **characterised in that** the operation of the engine is controlled using an auto-adaptively-controlled electronic exchange to which a group of electromechanical elements is connected. The aforementioned electromechanical elements are interconnected as follows: a) sensors which supply information to an electronic control unit, namely the temperature of the load mix, the pressure of the load mix, signals from the position and pulse encoder, the temperature of the exhaust gases, the exhaust gas probe λ, the accelerator pedal and the tacograph signal; and b) signals originating from the electronic control unit, which actuate the following devices, namely a power control butterfly valve, a proportional gas valve, the system for the synchronised firing of each of the cylinders, a relief valve for controlling the pressure of the engine charge air, and a safety gas cut-off valve.

## Description

Improvements to the means for transforming a diesel engine into a liquefied natural gas engine.

### BACKGROUND OF THE INVENTION

Some systems are already known for transforming diesel engines into liquefied natural gas-fuelled engines in which two valves are used for the gas supply, said valves namely being a main one and another one for the idling conditions, for the ignition control an encoder being used which generates 60 pulses per turn.

These systems require specific components and thus result in a more complicated and expensive transformation.

### SUMMARY OF THE INVENTION

This invention has as its object the provision of improvements to the means for transforming a diesel engine into a liquefied natural gas engine thereby obtaining a correct operation by using universal components hence resulting in a corresponding cost reduction, said improvements allowing to obtain a higher accuracy in the operation of the ignition system as well as to protect the engine from a sustained excess power or from extremely hot weather conditions.

In these improvements a characterising feature lies in the fact that the control of the operation of the engine is achieved by means of a self-adaptive, electronic exchange to which those of a set of interconnected electromechanical elements are connected as per the following grouping:
a) sensors being adapted for giving the following information to an electronic control unit: intake mixture temperature; intake mixture pressure; position and pulse encoder signals; exhaust gas temperature; exhaust gas λ probe; accelerator pedal; and tachograph signal;
b) signals that upon being received from the electronic control unit are used for bringing about the actuation of the following devices: a butterfly valve for the power regulation; a proportional gas valve; the synchronised ignition system for each of the cylinders; a waste gate for controlling the engine intake air pressure; and a safety gas stop valve.

The self-adaptive managing system being incorporated does besides allow to tune up the engine by means of a lesser number of trials.

With the information being received the electronic control unit then proceeds to in a self-adaptive mode manage the operation of the engine both in steady-state and in transient-state situations thereby being in a position to protect the engine by automatically reducing the output power and/or acting on the spark lead in front of situations such as: extremely hot weather conditions, dirt in the intake air cooling systems, inadequate gas proportioning, and faulty spark lead adjustment.

These improvements allow the engine to be operated with a low gas mixture hence resulting in a less polluting operation and a higher efficiency with respect to a stoichiometric engine.

An also characterising feature of these means lies in the use of a high-resolution encoder (1800 pulses per turn) allowing to obtain a higher accuracy in the operation of the ignition system.

Through the development and realisation of the electronic exchange a simplification of the general structure of the transformation means is achieved while developing an architecture of the electronic control system being highly efficient and of a modular construction, all of the modules being connected to each other by means of a CAN line, said modules corresponding to the ignition, to the control butterfly valve, to the data supplying sensors, and to the engine safety.

Each module processes and interprets the information being received from its sensors and/or actuators and sends digitally encoded information to the CAN line for it to be used by other modules.

These and other features will be best made apparent by the following detailed description whose understanding will be made easier by the accompanying three sheets of drawings showing a practical embodiment being cited only by way of example not limiting the scope of the present invention.

### DESCRIPTION OF THE DRAWINGS

In the drawings:

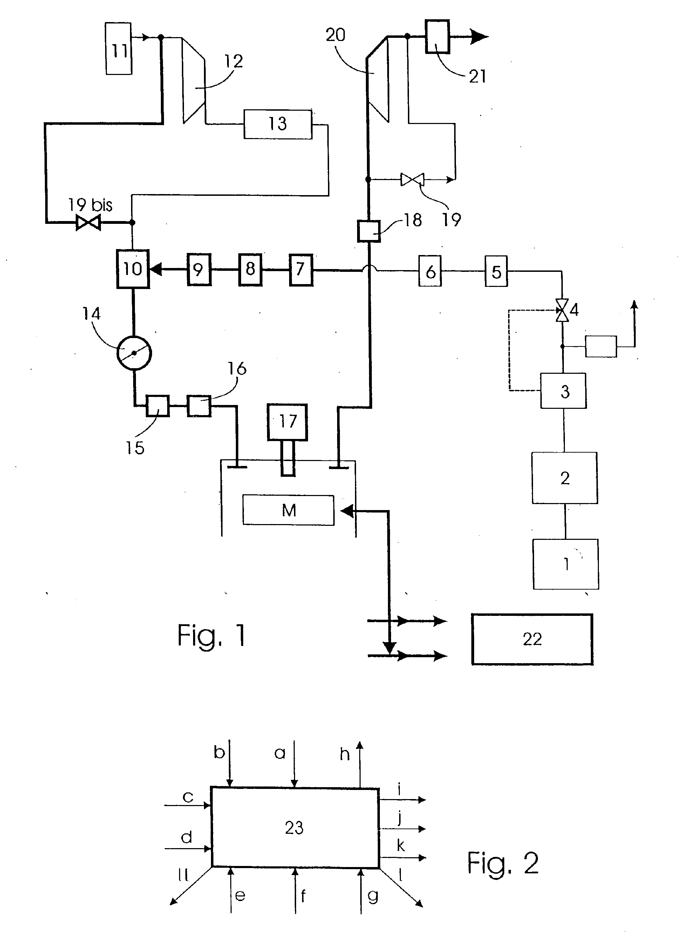

Fig. 1 is a general diagram featuring all of the components intervening in the transformation of the diesel engine into a liquefied natural gas engine;
Fig. 2 diagrammatically depicts the inputs and outputs of the electronic control unit;
Fig. 3 corresponds to the diagram of the general structure of the transformation means; and
Fig. 4 corresponds to the modular block diagram of the architecture of the electronic control system.

In this general diagram those components being conventional in the systems for transforming a diesel engine into a liquefied natural gas engine have been depicted with thin lines whereas those characteristic components being the object of the invention have been depicted with solid lines.

### DESCRIPTION OF A PREFERENTIAL EMBODIMENT

The gas is supplied from a tank (1) containing liquefied natural gas that is thereupon gasified at (2) with the temperature of the tank (1) being controlled at (3), the gas thereupon passing through an opening and closing valve (4). From here the gas flows through a filter (5) and through a pressure regulator (6).

Once having attained the adequate pressure the gas is filtered again at (7) and thereupon flows through a safety gas stop valve (8) till reaching the proportional gas valve (9) from which the gas flows into a mixer (10) also receiving the air flowing into it from the filter (11) after having passed through an ulterior compressor (12) and intercooler (13).

In the mixer (10) the air-gas mixture is produced and then reaches the intake butterfly valve (14) by means of which the engine output power is regulated. The air-gas mixture passes through an intake mixture pressure probe (15) and through a temperature probe (16) sensing the temperature of said mixture before reaching the engine (M) having fitted to it the ignition system (17) for a synchronised ignition of each of the cylinders.

The exhaust gases from the engine (M) pass through a temperature probe (18) (optionally through the action of a waste gate (19) for controlling the engine intake air pressure), through a turbine (20) and through a λ probe (21). The engine intake air pressure control can be as well adjusted by means of another control valve (19 bis) being controlled from the electronic exchange (23).

Numeral (22) designates the position and pulse encoder being mechanically fitted to the distribution system of the engine.

The electronic control unit (23) has the inputs (a), (b), (c), (d), (e), (f) and (g) respectively corresponding to the signal from the tachograph (if required by the vehicle), from the accelerator pedal, from the λ probe (21), from the exhaust gas temperature probe (18), from the encoder (22), from the temperature probe (16), and from the intake mixture pressure probe (15).

This electronic control unit has the outputs (h), (i), (j), (k), (1) and (ll) respectively corresponding to the ignition system (17) for a synchronised ignition of each of the cylinders, to the gas control by means of the proportional valve (9), to the gas stop control by means of the valve (8), to the control of the butterfly valve (14), and to the control of the waste gate (19), or in its absence to the control of the control valve (19 bis), or none of both.

Without the exhaust gas temperature probe (18) and without the λ probe (21) the system will be an open-loop, nonself-adaptive one.

With the lambda probe (21) the system will be a closed-loop, self-adaptive one (receiving its feedback from the λ probe) being protected against an excess temperature (in the ample sense) if it incorporates the probe (18).

The essential features of the electronic control unit are as follows with respect to:
the supply of LNG: by means of a proportional gas valve and with self-adaptive system;
the ignition system: with individual coil and with a highly accurate control of the ignition system by means of optical encoder (1800 pulses/turn);
the power regulation: by means of a motor-actuated butterfly valve;
the regulation of the discharge pressure of the compressor (depending on the turbocompressor unit): with control of the waste gate (19) and of the bypass of the compressor by means of the control valve (19 bis), and with a specific regulation of the power control valve (14);
the proportioning regulation: with the engine operating with low gas proportionings in a steady state and with the possibility of enriching the mixture in a controlled manner under transient conditions;
the control of the engine: by means of pedal with electronic control and with power restriction and/or stoppage of the engine through the vehicle's speed signal through the tachograph when such a thing is required, or by other systems.

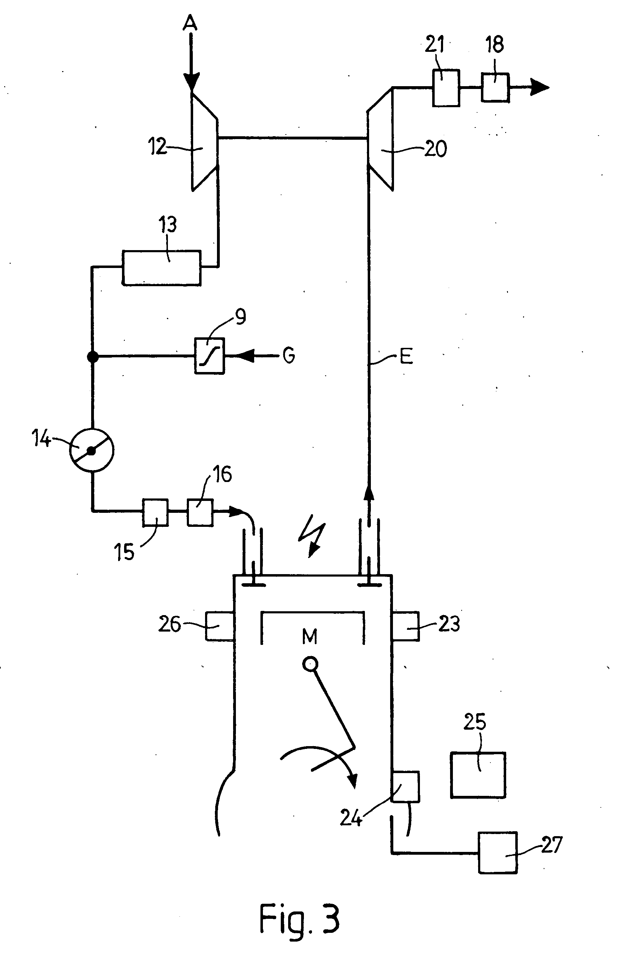

The general structure of the means for transforming a diesel engine into a liquefied natural gas engine as per Fig. 3 comprises the compressor (12) at the air inlet (A) and the turbine (20) being installed in the exhaust gas line (E) and followed by the λ probe (21) and the temperature probe (18). The block of the motor (M) incorporates a detonation sensor (23'), a sensor (24) for the rotational speed of the engine and the referential position (encoder) with positional reference (25) of the engine, and an engine cooling water temperature sensor (26).

The air exiting the compressor (12) passes through the intercooler (13) and then receives the gas (G) through the proportional valve (9).

The air-gas mixture reaches the motor-actuated butterfly valve (14) feeding the engine and thereupon passes through the admission pressure sensor (15) and through a temperature sensor (16) before reaching the engine (M), this latter having an oil temperature sensor (27).

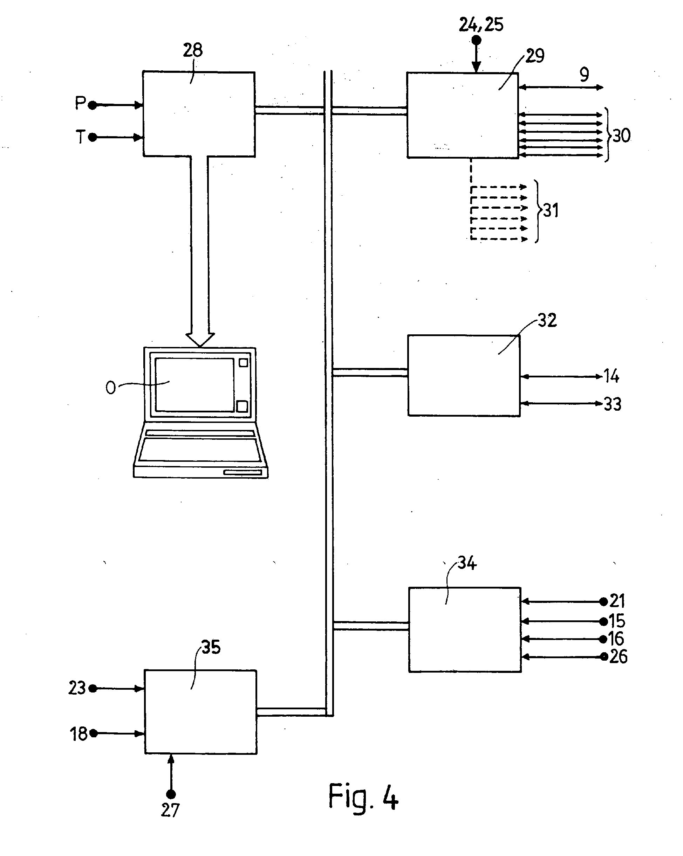

The modular block diagram of the electronic control system as per Fig. 4 comprises the exchange module (28) being installed in the cab of the vehicle and having the following functions: it contains the main program for managing the operation of the engine; it interprets the position of the accelerator pedal (P) and hence the power needs of the driver of the vehicle; and it interprets the signal from the tachograph (T) according to the speed of the vehicle (this latter shall not surpass the maximum speed being legally authorised according to the vehicle).

This exchange module (28) can communicate with a computer (O) for the purpose of: introducing updatings for the main program as regards the parameters; reading data of the operation of the system thereby obtaining the instant values of all of the parameters; and storing the previous data.

Module (29) corresponds to the ignition and has the following functions: control (30) for the generation of the sparks at the sparkplugs as per the firing order being established for the six cylinders; control of the proportional gas supply valve (9); (optional) control (31) of the sequences of the injectors for the gas supply. This module (29) feeds on the information arriving from the encoder (24, 25) being actuated by the actual engine and supplying frequency signals of the speed and the position of the piston of the first cylinder.

Module (32) corresponds to the butterfly valve (14) with the function of controlling said motor-actuated valve feeding the mixture to the engine. It is also possible to control a secondary, motor-actuated butterfly valve (33) being (optionally) provided for controlling the turbocompressor discharge pressure.

Module (34) corresponds to the sensors providing the data being acquired and has the following functions: collecting the information arriving from most of the analog and digital sensors (21, 15, 16 and 26) of the engine, and conditioning said signals and processing them.

Module (35) corresponds to the safety of the engine and has the following functions: interpreting and processing the information arriving from the piezoelectric sensor (23'), from sensor (18), and from sensor (27). Corrections can thereby be effected as regards the spark lead and the maximum intake manifold pressure in order to protect the engine against a thermal and mechanical excess load.

## Claims

1. Improvements to the means for transforming a diesel engine into a liquefied natural gas engine, **characterised in that** the control of the operation of the engine is achieved by means of a self-adaptive, electronic exchange to which those of a set of electromechanical elements are connected as per the following grouping:
a) sensors being adapted for supplying the electronic control unit (23) with information such as: intake mixture temperature (16); intake mixture pressure (15); signals from the position and pulse encoder (22); exhaust gas temperature (18); exhaust gas λ probe (21); accelerator pedal; and tachograph signal;
b) signals that upon being received from the electronic control unit (23) are used for bringing about the actuation of the following devices: a butterfly valve (14) for the power regulation; a proportional gas valve (9); the synchronised ignition system (17) for each of the cylinders; a waste gate (19) or (19 bis) for if necessary controlling the engine intake air pressure; and a safety gas stop valve (8).

2. Improvements as per claim 1, **characterised in that** with the information being received the electronic control unit (23) then proceeds to in a self-adaptive mode manage the operation of the engine both in steady-state and in transient-state situations.

3. Improvements as per claim 1, **characterised by** the use of a high angular accuracy encoder (22) allowing to angularly manage the spark lead.

4. Improvements as per claim 1, **characterised by** the use of one only proportional gas valve (9) being fed at a constant and stable pressure.

5. Improvements as per claim 1, **characterised in that** the exchange module (28) is connected by means of a CAN line to modules corresponding to the ignition (29), to the control butterfly valve (32), to the data supplying sensors (34), and to the motor safety (35), said modules also being connected to each other by means of the CAN line.

6. Improvements as per claim 5, **characterised in that** the ignition module (29) controls the proportional gas supply valve (9) and is related with the pulse encoder (24, 25) being actuated by the actual engine and thus controls the actuation of the cylinders.

7. Improvements as per claim 5, **characterised in that** the ignition module (29) controls (31) the sequence of the gas supplying injectors.

8. Improvements as per claim 5, **characterised in that** the module (32) controlling the motor-actuated butterfly valve (14) feeding the motor does besides comprise a secondary, motor-actuated butterfly valve (33) for the control of the discharge pressure of the turbocompressor.

9. Improvements as per claim 5, **characterised in that** the module (34) pertaining to the sensors controls the engine temperature (26), the mixture temperature (16) in the intake manifold, the pressure (15) of the mixture in said manifold, and the λ probe (21) for the exhaust gases.

10. Improvements as per claim 5, **characterised in that** the engine safety module (35) comprises a detonation sensor (23'), at least one exhaust gas temperature sensor (18), and one lubricating oil temperature sensor (27), the spark lead and the intake manifold maximum pressure being controlled with said sensors.

11. Improvements as per claim 5, **characterised in that** the exchange module (28) communicates with a computer (O) into which the parameters are introduced and their instant values are thus obtained, the previous data being stored in said computer.
